# EUROPEAN PATENT SPECIFICATION

(11) **EP 4 447 391 B1**
(45) Date of publication and mention of the grant of the patent: **21.10.2026**
(21) Application number: 23866615.0
(22) Date of filing: 05.09.2023
(51) Int. Cl.: H04L 41/044, H04L 41/04, H04L 9/40

(54) **OPERATION AND MAINTENANCE METHOD AND SYSTEM FOR AUTOMATICALLY AND UNIFORMLY MANAGING NODES OF BASTION HOST**
BETRIEBS- UND WARTUNGSVERFAHREN UND SYSTEM ZUR AUTOMATISCHEN UND GLEICHMÄSSIGEN VERWALTUNG VON KNOTEN EINES BEGRÜNUNGSHOSTS
PROCÉDÉ ET SYSTÈME D'EXPLOITATION ET DE MAINTENANCE POUR GÉRER AUTOMATIQUEMENT ET UNIFORMÉMENT DES NOEUDS D'UN HÔTE BASTION

(30) Priority: 02.03.2023 CN 202310192294; 02.03.2023 CN 202310223977
(43) Date of publication of application: 16.10.2024
(73) Proprietor: HANGZHOU PINGPONG INTELLIGENCE TECHNOLOGY CO., LTD., Hangzhou, Zhejiang 310051 (CN)
(72) Inventor: JIA, Xiaohui, Hangzhou, Zhejiang 310051 (CN); CHEN, Peng, Hangzhou, Zhejiang 310051 (CN); ZHAO, Zhehui, Hangzhou, Zhejiang 310051 (CN); CHEN, Yu, Hangzhou, Zhejiang 310051 (CN); WANG, Ning, Hangzhou, Zhejiang 310051 (CN); LU, Shuai, Hangzhou, Zhejiang 310051 (CN)
(74) Representative: Bornier, Raynald
(86) International application number: PCT/CN2023/116980
(87) International publication number: WO 2024/178940

(56) References cited:
- CN-A- 106 657 011
- CN-A- 108 551 400
- CN-A- 111 314 282
- CN-A- 112 527 379
- CN-A- 113 765 871
- CN-A- 113 938 321
- CN-A- 113 938 321
- CN-A- 114 244 604
- CN-A- 114 500 023
- CN-A- 116 192 600
- CN-A- 116 232 843
- CN-B- 113 364 758
- US-A1- 2013 124 685

## Description

### BACKGROUND OF THE INVENTION

### Field of the Invention

The invention relates to an operation and maintenance management method, in particular, to an operation and maintenance method and system for automatically and uniformly managing nodes of a bastion host.

### Description of the Prior Art

Shanghai Shangxun Information Technology Co., Ltd. disclosed an operation and maintenance management system upgrading method and equipment based on bastion host in 202010956472X. According to the scheme, 1) firstly, an upgrading file package containing files to be upgraded and tool files is uploaded to a system background through the system foreground, and an upgrading command is sent to the system background; 2) and the system background carries out statistics to obtain quantity information of to-be-upgraded files to serve as denominator numerical value information of upgrading progress value information; 3) the system background executes the tool files, copies the to-be-upgraded files to corresponding target positions respectively, and records state information of each to-be-upgraded file in real time; 4) each time the tool files are executed, the molecular numerical information of the upgrade progress value information is incremented by 1, wherein the molecular numerical information of the upgrade progress value information is initially 1; 5) according to the denominator numerical information and the molecular numerical information of the upgrade progress value information, the upgrade progress value information is calculated and obtained in real time, and the upgrade progress value information is returned to the system foreground; 6) the upgrade progress value information is displayed in real time through the system foreground. Applying the invention to the operation and maintenance management system can not only accurately display the upgrade process and progress, but also provide tracking basis when an abnormality occurs in the upgrade.

Chengdu High-tech Vision Digital Technology Co., Ltd. in a patent numbered 202111093307.7, disclosed a method for operation and maintenance of a hosting-free host account through a bastion host. The method includes the following steps: S1, a user logs in the bastion host, the bastion host verifies whether a login user name and a password or a secret key are correct or not according to a user login credential, and if the login user name and the password or the secret key are correct, the user logs in the bastion host through authentication; S2, after successfully logging in the bastion host, according to the authority of the user, selecting a host needing to be accessed from the queried host list for operation and maintenance login; and S3, judging whether the password of the server is hosted to the bastion host or not, if the password of the server is not hosted to the bastion host, manually inputting the account password by operation and maintenance, and if the password of the server is hosted to the bastion host, filling the password stored in the database into the server for authentication so as to realize password-input-free login. According to the method, the problem that the user operates and maintains the server inconveniently through the bastion host can be effectively solved, the automation degree is higher, the operation and maintenance login time of the user can be shortened, the server login credential is not hosted to the bastion host, and the risk of credential leakage is reduced.

There is a technical flaw that unified management cannot be achieved for the existing bastion host systems. When there are a large number of hosts and users, the operation and maintenance management cost of the entire bastion machine is very high and the security cannot be guaranteed. Taking a host as an example, it involves the user's machine permission management, machine monitoring and management, and daily operation and maintenance management. If managed according to the above patent proposal, the cost is high and each has its own policies, making the entire management difficult.

Document CN113938321A describes an extensible operation and maintenance management system. Document CN114244604A describes an integrated authority management method, system and device suitable for a bastion machine and a readable storage medium.

### SUMMARY OF THE INVENTION

The invention provides an operation and maintenance method and system for automatically and uniformly managing the nodes of bastion host so as to solve the problems high cost, separate policies and difficult overall management in the prior art.

The invention provides an operation and maintenance method for automatically and uniformly managing nodes of bastion host, according to the claims.

In particular, the method comprises:
S1: setting an architecture of the bastion host divided according to independent network areas of respective business sites to treat each independent network environment in different regions as an independent node, and then in the nodes, planning a machine as a security entrance Login host of the nodes and a machine as an operation and maintenance management and control Master host of the nodes, the Master host being responsible for managing all business hosts of the node;
setting a Central control server as a superior Master host of the Login host and the Master host of each node, wherein the Central control server is deployed with a WEB system and has a build file and configuration information of a global system, and the Central control server regularly maintains synchronization of related data of the corresponding node with the Master host of the nodes;
S2: issuing and executing, by the Central control server, a task to the Master host of a target area node, wherein the task includes one of the tasks of issuing user permission management and control, machine monitoring, and daily operation and maintenance for a target machine of the node;
S3: setting, by the Master host, a sentinel program to parse and complete operations for the corresponding task when the task is detected.

Further, the issuing a task of user permission management and control for a target machine of the target area node may further include:
by the Central control server, generating a Local-Login RSA key pairs for users who apply and are authorized, and giving permission to create a user account on the Login host corresponding to the target area node so that the users have their own independent account, and recording permission of the user in the Redis of the master controller, wherein the permission further includes contents such as related node information where the permission is adapted, a Master host, a permission type, and a permission aging length;
by the Central control server, sending the corresponding task to the Login host or the Master host of related nodes where the permission is adapted;
by the Master host, receiving the task, creating account information of the user, and recording user-machine information including the permission aging length into the Redis on the Login host of the target area node corresponding to the related nodes where the permission is adapted;
by each target area node, initiating a permission recovery program regularly to recycle the user-machine information whose permission has expired on the day to pass the user-machine information that is about to expire at an appointed time;
deleting the corresponding record in the Redis of the master controller, and issuing a task of the user permission management and control that the Master host of the corresponding node recovers permission of using the machine for the user when the Central control server receives an emergency user permission management including a personnel resignation.

Further, the method may further include: executing to be configured to manage Salt-Master access of the node when a new machine is accessed to a certain node: completing initialization operations of the new machine by running an access machine initialization script of the Master host of the node to give the new machine a standardized name and installing a Salt-Minion as well as configuring the Master host belonged thereto, and performing the management for access of the Master host of the node immediately after execution to record the Redis of the node and the Redis of a remote Central control server.

Further, the executing to be configured to manage Salt-Master access of the node when a new machine is accessed to a certain node may further include: executing a preset publishing machine public key acquisition program to obtain public key information corresponding to the new machine from a public key extension file in a preset location of the Redis of the node;
issuing a task of updating the public key to the Master host where the related node is located that is adapted to the user permission when the Central Master host generates the Local-Login RSA key pairs or updates the public key for the users who apply and are authorized;
receiving the public key update, by the Master host, to update the new public key information in the public key extension file in the corresponding location of the Redis of the node;
at the same time, obtaining, by the corresponding machine, the corresponding updated public key information of the new machine from the public key extension file at the preset location in the Redis of the node.

Further, the executing the Master host to complete a task of daily operation and maintenance includes:
the executing to be configured to manage Salt-Master access of the node when a new machine is accessed to a certain node may further include: obtaining a tool script library of a determined location in the Redis of the node to facilitate the synchronized series of a tool script for the user to use, writing a crontab task at the preset location including a disk cleanup task and a salt-minion automatic pull task, and automatically configuring a configuration file at a specified location;
sending, by the Central control machine, an update and/or an extension task including the tool script library, the crontab task, and the configuration file to the Master host of the corresponding node;
updating, by the Master host of the corresponding node, related contents such as the tool script library, the crontab task, and the configuration file corresponding to the specified location;
taking over, by the Master host, the corresponding machine to process contents related to the corresponding locations.

Further, the method may further include:
by the Central control server, setting the build file and the configuration information of the global system, and regularly synchronizing and backing up core data to the Master host of the nodes while synchronizing the build file and the configuration information of the global system to an enterprise Git repository;
updating the build file and the configuration information of the global system to the enterprise Git repository when a problem occurs with the Central control server;
obtaining and generating a new Login host and a new Master host from the Central Master host through a template when a problem occurs with the Login host or the Master host.

Further, the method may further include:
by the Central control server as a dispatch center, managing the Login host and the Master host of respective independent nodes to indirectly and uniformly manage the host of the nodes;
by the Central control server, deploying the WEB system to consolidate various daily necessary functions, unifying the various collected data as a data overview to display IT resources of all nodes, and displaying real-time monitoring of related data according to an application grouping dimension.

Further, the method may further include:
setting a sentinel program for each Master host, which is responsible for monitoring and recording events such as access and offline of the business host of the node where the sentinel program is located, and jointly updating the configuration file used for local monitoring or batch operation and maintenance, the configuration file used for batch operation and maintenance further comprising the configuration file in the application group dimension; and setting an initialization script of the accessed new machine on the Master host of the nodes;
triggering, by the Master host of a certain node, a Salt-Minion access event once a certain node is accessed to a new business host: performing initialization steps including naming the new machine according to the three-section rule of application group-intranet IP-network area, installing the Salt-Minion on the new machine and configuring the Master host belonged thereto after the new machine executes the initialization script;
when a certain application group updates operation and maintenance management data, determining the node where the application group is located, obtaining all machine names of the same application group through the Master host of the corresponding node according to an application group field, and further writing a batch operation and maintenance management configuration file to the above machines through the Salt-Minion.

Further, the method may further include:
automatically generating a monitoring configuration file of Prometheus on the business host;
by the local Master host, detecting an alarm message, and synchronizing the alarm information including a host name where the alarm is located to the Central control server;
by the Central control server, parsing the application group and the network area where the alarm information host is located through the host name where the alarm information occurs;
issuing the corresponding execution task to the Master host of the node that is adapted if the corresponding business host of the network area and/or the application group needs to be processed according to the alarm information.

Further, the method may further include:
finding the Master host belonged thereto according to the network area field and performing the corresponding task when the Central control machine parses the business host name;
completing naming the new machine according to the three-section rule of the application group-intranet IP-network area after the new machine executes the initialization script, the network areas having an independently named intranet IP, the intranet IPs in different network areas being the same.

Further, the method may further include:
exposing, by the Login host as the security entrance machine of the node where the Login host is located, a standard sshd port to the outside so that the user is assigned a login_id_rsa to log in to the corresponding Login host to enter an intranet of the node where the Login host is located.

Further, the method may further include: deploying a basic component on the Master host of the node, which further comprises: deploying the Salt-Minion to receive a dispatch task from the Central control server, deploying a Redis to record the related data corresponding to user permission-machine in the node, and deploying the Salt-Master to receive and manage the business host with the Salt-Minion installed in the node;
not exposing, by the Master host as the operation and maintenance management and control machine in the network area, any ports to the outside, and trusting the network access of the Central control server internally;
synchronizing, by the Central control server, respective basic template management after the initial installation of the Login host and the Master host of the nodes is completed: completing, by a # salt -N login state.apply group.login, template synchronization to the Login host, and completing, by a # salt - N master state.apply group.master, template synchronization to the Master host.

In a second aspect, the invention provides an operation and maintenance system for automatically and uniformly managing nodes of bastion host, which includes:
an architecture of the bastion host divided according to independent network areas of respective business sites to treat each independent network environment in different regions as an independent node,
in the nodes, a machine as a security entrance Login host of the nodes and a machine as an operation and maintenance management and control Master host of the nodes, the Master host being responsible for managing all business hosts of the node;
a Central control server, as a superior Master host of the Login host and the Master host of each node, wherein the Central control server is deployed with a WEB system and has a build file and configuration information of a global system, and the Central control server regularly maintains synchronization of related data of the corresponding node with the Master host of the nodes, and the Central control machine is used to issue a task to the Master host of the target area node, the task including one of the tasks of issuing user permission management and control, machine monitoring, and daily operation and maintenance for a target machine of the target area node;
the Master host is used to set a sentinel program to parse and complete operations for the corresponding task when the task is detected.

Further, the Redis is set on the nodes with a determined location stored with a tool script library, a crontab task and a configuration file respectively, the tool script library providing a series of synchronization a tool script for the user to use conveniently; the crontab task includes a disk cleanup task and a salt-minion automatic pull task;
the Master host is further configured to receive an update and/or an extension task including the tool script library, the crontab task and the configuration file sent from the Central control server to the Master host of the corresponding node, to update the tool script library, the crontab task, the configuration file and other related contents corresponding to the specified location, and then taking over to process the contents related to the corresponding location.

Compared with the prior art, the invention can achieve the following beneficial effects: no matter distribution of user permission, daily deployment of machine monitoring and network monitoring or batch management of daily operation and maintenance, the operation and maintenance method and system can be abstracted as follows: master control dispatches a Master of a certain area node to issue and execute a certain task, and unified management is naturally achieved; the design concept can be continued subsequently to integrate the management of container clusters and continuously expand management objects to make the functionality more powerful and efficient, wherein to a certain extent, there is no difference between managing dozens of network areas and managing one network area for the bastion machine; whether there are a few machines or dozens or thousands of machines, the management cost will not change significantly.

### BRIEF DESCRIPTION OF THE DRAWINGS

Fig. 1 is an example diagram of the principle of an operation and maintenance management system according to an embodiment of the invention;
Fig. 2 is a diagram of the principle of an operation and maintenance management method according to an embodiment of the invention.

### DESCRIPTION OF THE PREFERRED EMBODIMENTS

The industry has many solutions for the safe and efficient management of large amounts of hosts, such as Ansible, Puppet, and SaltStack, which can all solve the problem of efficient and safe management of large amounts of hosts in enterprises to a certain extent. According to the emergence time of these tool systems, first there was Puppet (full-featured and complex), then Ansible (simple and convenient), and then SaltStack (efficient and simple). SaltStack can understand and balance the two and introduce many new ideas. SaltStack is a centralized management tool for server infrastructure based on C/S architecture. It is called Master on the management side and Minion on the client side. SaltStack has configuration management, remote execution, monitoring and other functions. SaltStack of open source version only provides basic solutions. However, in actual work, a lot of maintenance skills are still required, such as grouping and monitoring configuration issues, as well as the challenges of operation and maintenance management of multiple independent network nodes in the enterprise. We expect to be able to conduct unified control and automatic monitoring of multiple network environments. We hope to achieve a goal of not relying on cross-node network connectivity. The network connectivity can certainly solve some problems, but considering the more scientific real-time collection of monitoring data for large amounts of business hosts through individual intranets and the future expansion of ultra-large-scale IT systems, a separate internal self-governance solution for nodes is considered.

The invention is described in detail with reference to the particular embodiments below. The following embodiments will be conducive to further understanding by those skilled in the art on the invention, but is not intended to limit the invention in any forms.

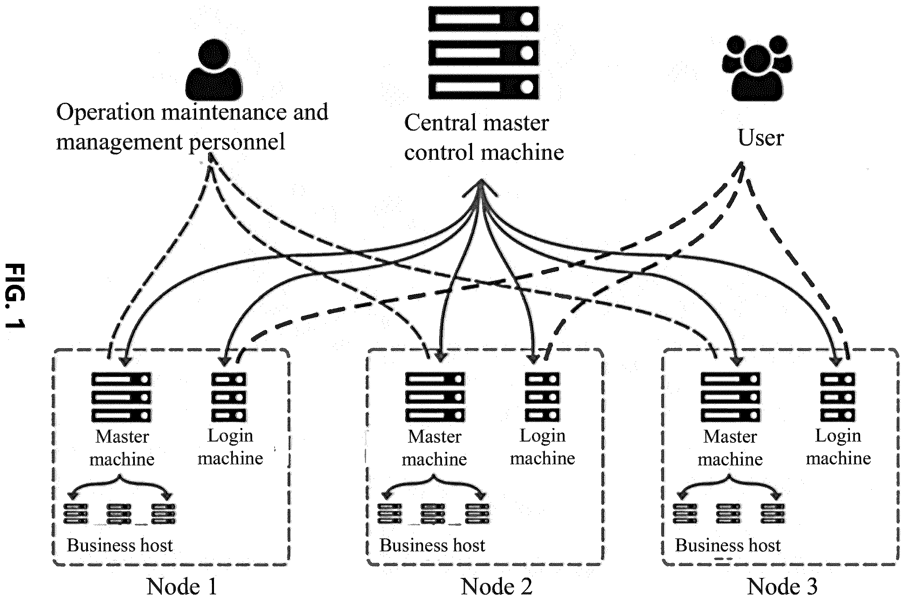

With reference to Fig. 1, a view of multi-operation and maintenance management system is shown. The invention divides according to independent network areas of respective business sites to treat each independent VPC network (Virtual Private Cloud, hereinafter referred to as VPC network) in different regions as an independent node, and then plans two machines in the nodes, of which one is served as a security entrance Login host (functioning like the current jumpserver) and the other is served as a machine as an operation and maintenance management and control Master host of the nodes; related basic services are deployed in the Login and Master respectively, and the Master is responsible for managing all business hosts of the nodes. The invention may further plan a central Central control server as a superior Master host of the Login host and the Master host of each independent node, so that the Central control server, as a dispatch center, manages the Login host and the Master host of respective independent nodes to further indirectly and uniformly manage the host of the nodes. In the invention, the Central will be deployed with a WEB system to incorporate various daily necessary functions. It unifies the various collected data as a data overview to display IT resources of all nodes, and displaying real-time monitoring of related data according to an application grouping dimension and so on so as to allow the users to have a clear view of various IT resources.

The embodiment provides a multi-operation and maintenance management system, which further includes:
multiple independent nodes 21, 22 and 23: divided according to independent network areas of respective business sites to treat each independent VPC network (Virtual Private Cloud) environment in different regions as an independent node, the nodes at least include a machine as a security entrance Login host 211 of the node and a machine as an operation and maintenance management and control Master host 212 of the node. The operation and maintenance management and control Master host 212 may manage and control a plurality of business hosts 213. Among them:
a sentinel program is set for each Master host 212, which is responsible for monitoring and recording events such as access and offline of the business host of the node where the sentinel program is located to jointly update the configuration file used for local monitoring or batch operation and maintenance, the configuration file used for batch operation and maintenance further including the configuration file in the application group dimension; an initialization script of the accessed new machine is set on the Master host 212 of the nodes for the Mater machine 212 of the node to trigger a Salt-Minion event once a new business host 213 is accessed in a certain node;
the Salt-Minion access event further includes: completing initialization steps including naming the new machine according to the three-section rule of application group-intranet IP-network area, installing the Salt-Minion on the new machine and configuring the Master host 212 belonged thereto after the new business host 213 executes the initialization script.

A Central control server 10 serves as a superior Master host of the Login host 211 and the Master host 212 of each independent node; the Central control server is deployed with a WEB system and has a build file and configuration information of a global system, and the Central control server 10 regularly maintains synchronization of related data of the corresponding node with the Master host 212 of the nodes for determining the node where the application group is located when a certain application group updates the operation and maintenance management data through the Master host 212 of the corresponding node and obtaining all machine names of the same application group according to an application group field to further writing the configuration file for batch operation and maintenance management to the above machines through the Salt-Minion.

The core of the invention lies in the separation of powers. The Login host 211 is only responsible for the security login entrance, the Master host 212 is only responsible for executing dispatching tasks, and the Central Master host 10 is only responsible for the issuing and dispatch of tasks. In this way, the system is highly secure and reliable. For example, if there is a problem with the service of the Central control server 10, it will not affect the assigned permission, and the nodes are independent of each other and does not affect each other. The Login and the Master play the role of a "manager" in a sense; once the Login or Master host of a certain node encounters an unrecoverable exception, the central control machine 10 may quickly regenerate a new Login or Master on the node, because the master control machine has the configuration data of the Login host 211 and the Master host 212 of the nodes as well as the full amount of system permission distribution historical data, which may be quickly generated, and also the data of the Central control server 10 is backed up every day; the data related to the node is synchronized to the Master host 212 of the corresponding node every day ("every day" is an example, mainly a specified period); as a result, the data of the master controller is very safe, and the system may expand and manage new nodes according to actual projects and enterprise development needs. In other words, the configuration management of the hosts in the nodes is unified: adopting the master controller + distributed bastion host architecture and equipping with the working mechanism corresponding to the architecture to unify the configuration management of the hosts in the nodes and realize the operation and maintenance of multiple nodes.

The core part is explained below through specific embodiments:
user machine permission: essentially, the Central control server 10 dispatches a certain Master host 212 to issue a task to a certain user to create his account on a certain machine.
machine monitoring: the essence is that the Central control server 10 dispatches a certain Master host 212 to issue a task of deploying the monitoring agent program to all the business machines of the node.
daily operation and maintenance: similarly, a certain Master host 212 performs a certain task on a certain group of machines or global machines.

Therefore, no matter distribution of user permission, daily deployment of machine monitoring and network monitoring or batch management of daily operation and maintenance, the operation and maintenance method and system can be abstracted as follows: master control dispatches a Master of a certain area node to issue and execute a certain task, and unified management is naturally achieved; the design concept can be continued subsequently to integrate the management of container clusters and continuously expand management objects to make the functionality more powerful and efficient, wherein to a certain extent, there is no difference between managing dozens of network areas and managing one network area for the bastion machine, whether there are a few machines or dozens or thousands of machines, the management cost will not change significantly.

The invention sets the operation of machines/users in the node to perform a certain task on a certain machine or a certain group of machines or a global machine. The permission management, the daily operation and maintenance, the security management, etc. are unified and set as task management and control based on a certain node and a certain machine.
the Master host 212 in this node serves as the master controller of the node to preset the related contents including the tool script library, the crontab task, and the configuration file in the Redis of the node, and a new machine is configured to manage Salt-Master access of the node when the new machine is accessed to a certain node: completing initialization operations of the new machine by running an access machine initialization script of the Master host 212 of the node to give the new machine a standardized name and installing a Salt-Minion as well as configuring the Master host belonged thereto, and performing the management for access of the Master host of the node immediately after execution to record the Redis of the node and the Redis of a remote Central control server. The more important part of access management is to obtain the tool script library, complete the crontab task, and automatically configure the configuration file. When the information needs to be customized, updated or modified, it is also sent to the Master host 212 in the form of a task through the Central control server 10, and then the Master host 212 updates it to the corresponding location to control the corresponding machine to complete the corresponding task through a takeover program.

This kind of operation and maintenance management realizes unified management and has strong scalability.

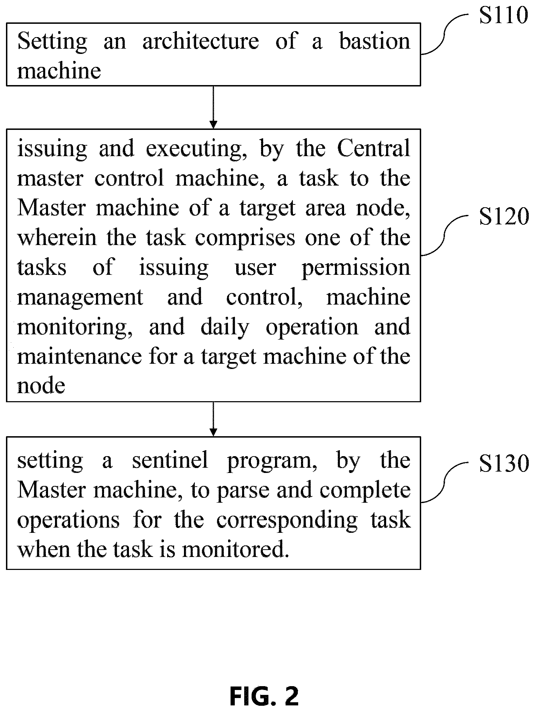

With reference to Fig. 2, the embodiment provides an operation and maintenance method for automatically and uniformly managing nodes of bastion host, which includes the following steps.
S110: an architecture of the bastion host is set by dividing according to independent network areas of respective business sites to treat each independent network environment in different regions as an independent node, and then in the nodes, planning a machine as a security entrance Login host of the nodes and a machine as an operation and maintenance management and control Master host of the nodes, the Master being responsible for managing all business hosts of the node;
setting a Central control server as a superior Master host of the Login host and the Master host of each node, wherein the Central control server is deployed with a WEB system and has a build file and configuration information of a global system, and the Central control server regularly maintains synchronization of related data of the corresponding node with the Master host of the nodes.
S120: The Central control server issues and executes a task to the Master host of a target area node, wherein the task includes one of the tasks of issuing user permission management and control, machine monitoring, and daily operation and maintenance for a target machine of the node.
S130: The Master host sets a sentinel program to parse and complete operations for the corresponding task when the task is detected.

The Master host of a certain node triggers a Salt-Minion access event once a certain node is accessed to a new business host: performing initialization steps including naming the new machine according to the three-section rule of application group-intranet IP-network area, installing the Salt-Minion on the new machine and configuring the Master host belonged thereto after the new machine executes the initialization script.

When a certain application group updates operation and maintenance management data, the node where the application group is located is determined, all machine names of the same application group are obtained through the Master host of the corresponding node according to an application group field, and further a batch operation and maintenance management configuration file is written to the above machines through the Salt-Minion.

The Master belonged thereto is found according to the network area field to perform the corresponding task when the Central control machine parses the business host name.

Naming the new machine is completed according to the three-section rule of the application group-intranet IP-network area after the new machine executes the initialization script, the network areas having an independently named intranet IP, the intranet IPs in different network areas being the same.

The system's default machine naming rule is "Application Group-Intranet IP-Network Area". The Application Group-Intranet IP-Network Area describes the application group where the machine is located, the network area where the machine is located (i.e. node information) and the intranet IP information of the machine in the network area. The positioning of the new machine is achieved through the network area (i.e., node information) where the machine is located and the intranet IP information of the machine in the network area. For example,

The machine name "gateway-192.168.104.214-Hangzhou"
may be resolved as a gateway machine in the entire multi-operation and maintenance management system, which has an intranet IP of 192.168.104.214, and this machine is under the network area of Hangzhou.

After the user submits the permission application for the above machine, the Central control server may find its own dispatched Master according to the network area field to perform the task, so the intranet IP of each network area may be repeated without affecting the global management of the system.

For the "sentinel" program of their respective nodes, when a new machine is accessed to the node, it can be naturally divided by field, for example, all machine names of the same application group are obtained according to the application group field, and then written into the configuration file for batch operation and maintenance management, such as

```
/etc/salt/master.d/nodegroup.conf /etc/ansible/hosts
   
```

```
while automatically generating a monitoring configuration file of
```

```
 Prometheus on the business host,
```

```
   such as
    ...
    - targets:
  - 192.168.104.214:9100
   labels:
  group: gateway
   ip: 192.168.104.214
   region: Hangzhou
   instance: gateway-192.168.104.214-Hangzhou
    ...
```

In this way, once an alarm is triggered, the system may clearly see which network area the alarm came from and what business machine it is from. These capabilities are derived from the very concise three-stage naming structure of the system.

In addition, the method also needs to explain the benefits of the management method of separation of powers, including the Login host and the Master host. The Login host, as the security entrance machine of the node where the Login host is located, exposes a standard sshd port to the outside so that the user is assigned a login_id_rsa to log in to the corresponding Login host to enter an intranet of the node where the Login host is located. A basic component is deployed on the Master host of the node, which further includes: deploying the Salt-Minion to receive a dispatch task from the Central control server, deploying a Redis to record the related data corresponding to user permission-machine in the node, and deploying the Salt-Master to receive and manage the business host with the Salt-Minion installed in the node. The Master host, as the operation and maintenance management and control machine in the network area, does not expose any ports to the outside, and trusts the network access of the Central control server internally. The Central control server synchronizes respective basic template management after the initial installation of the Login and the Master of the nodes is completed:
a # salt -N login state.apply group.login completes the template synchronization of the Login host;
a # salt -N master state.apply group.master completes the template synchronization of the Master host.

In fact, for the Central machine, naming one salt '*' state.apply may complete the template synchronization management of two sets of machines on one node, including the synchronization of the basic configuration of the two sets of machines, the issuing of the "sentinel" programs of the nodes, etc.

Specifically, the initialization of the new machine means that the new machine is accessed and managed by the Salt-Master of the node where the new machine is located; the Master of the nodes has an accessed machine initialization script, and the initialization is completed immediately after the new machine executes; the core function of this script is to standardize the naming of the new machine, install Salt-Minion and configure the Master belonged thereto, and to be immediately accessed and managed by the Master host of the node where the new machine is located after execution while triggering the access event to record into the Redis of the local area and the Redis of a remote master controller.

The Central control server has the build file and the configuration with the global system including the Login host and the Master host of the nodes, and regularly back up the core data to the Master host of the nodes. Under normal circumstances, all files in the global system of the master controller will also be synchronized to the enterprise Git repository to ensure that they will not be lost. This configuration prevents the problem of losing the core configuration files of the system; and if there is a problem with the Central control server, the system may download the build file of the global system from any Master or Git repository to quickly build a new Central control server. Also, if there is a problem with one of the Login host or one of the certain Master host, the Central control server may also generate a corresponding new Login host or Master host through the template and the core data.

The management for user machine permission is performed by the Central control server to dispatch an adapted Master to issue a task to the user to create his account on the corresponding machine; the machine monitoring is performed by the Central control server to dispatch the adapted Master to issue a task of deploying the monitoring agent program to all the business machines of the node; the daily operation and maintenance operation is performed by the Central control server to execute a certain task for an adapted group of machines or the global machines on the adapted Master, so as to achieve unified management. Therefore no matter distribution of user permission, daily deployment of machine monitoring and network monitoring or batch management of daily operation and maintenance, the system may be abstracted as follows: the Central control server dispatches a Master of a certain area node to issue and execute a certain task, and unified management is naturally achieved; the design concept can be continued subsequently for the invention to integrate the management of container clusters and continuously expand management objects to make the functionality more powerful and efficient, wherein to a certain extent, there is no difference between managing dozens of network areas and managing one network area for the system; whether there are a few machines or dozens or thousands of machines, the management cost will not change significantly for the system.

As mentioned above, all machine names of the same application group are obtained through the Master host of the corresponding node according to an application group field, and further a batch operation and maintenance management configuration file is written to the above machines through the Salt-Minion, which further includes: using the Central control server to dispatch and adapt the Master for executing the corresponding configuration files for machines that meet the requirements, wherein the meeting the requirements further includes causing the application group names to meet the requirements. The application group may be divided into application groups of different machines according to the functions implemented in the management system, and may also be divided into application groups of different machines according to the applications implemented in the management system. With this three-section naming method and the management method of the system, the invention may achieve batch management of business machine clusters through the application group dimension.

In addition, in the method, when a new business host is accessed, a monitoring configuration file of Prometheus may be automatically generated; the local Master host detects an alarm message, and synchronizes the alarm information including a host name where the alarm is located to the Central control server; the Central control server parses the application group and the network area where the alarm information host is located through the host name where the alarm information occurs; the corresponding execution task is issued to the Master host of the node that is adapted if the corresponding business host of the network area and/or the application group needs to be processed according to the alarm information.

The automatically generating a monitoring configuration file of Prometheus on the business host further includes the following.

The core configuration is uniformly distributed from the Central control server to the Master of the nodes, specifically to the monitoring object of the nodes: when a new business host in the node is accessed, the configuration is automatically generated on the host;
through the API of the cloud service provider, an alarm is configured for Aliyun and AWS cloud monitoring data acquisition, and also the Prometheus network monitoring component blackbox_exporter is deployed on the Master host as the network monitoring and detection service of the node;
when the business host is accessed to the node, it obtains the Prometheus monitoring configuration file through the Master host of the node;
three alarm levels info/warning/critical are set: The node collects monitoring data->The node matches the early warning rules-> The node issues alarms including phone calls and self-governs the alarms of the node, while initiating to monitor and detect the Central control server itself and initiating early warning notifications in a timely manner; of course, the Central control server itself also initiates related service detection of the Master of the nodes to complete the self-monitoring of the system itself; in this way, whether there is a problem with the basic services of the Central control server or the basic services of each Master, an alarm will be received and handled in a timely manner.

In addition, when a new machine executes the access script, it completes the management of the Master in the area where it is located; the default SaltStack execution template rules are set according to the invention, and then a series of template actions on the new machine are performed, mainly including 7 general templates (the 7 general templates are only examples and are not used to limit the invention):
1. The synchronization series tool scripts are in the /opt/sys/ directory of the new machine, the init.sh is the initialization script, the name.sh is the renaming script, and the src.sh is the basic software installation script written by the invention, etc.; these scripts may be continuously expanded according to our daily work; that is to say, after the new machine is taken over, we have agreed that some tool scripts required by default are in the /opt/sys/ directory, which is convenient for every technician to use, and when a certain script needs to be updated, all scripts in the system may be updated to the same version through the above method.
2. The default crontab task is written in, including the disk cleanup task and the salt-minion automatic pull task (placed in salt-minion due to various abnormal offline problems); of course, these basic tasks may also be continuously expanded according to the needs of daily work.
3. The default basic configuration is executed, such as the public key information to be entered by default, and this information may be customized and expanded in the /srv/pillar/master.sls of the respective node; for example, as soon as a new machine is accessed, the publishing machine public key s entered immediately, thereby completing the channel problem of the publishing machine public key. At the same time, some basic environment variables, the business running account that the system needs to create by default, and the connection number and configuration for the machines that has been adjusted, and so on may be automatically synchronized.
4. Defined basic tools are installed, such as vim, wget, etc.
5. A customized security sshd configuration file is automatically configured, Password authentication, full private key authentication, and the intranet IP and whitelist users trusted by the node are disabled by default.
6. Related configurations of the salt-minion are automatically synchronized.
7. Network parameters of the new machine are automatically set.
8. A customized template, and the nodes may customize related management tasks according to the needs of the nodes.

Since the template configuration file of each Master is issued and synchronized by the master control machine, the expansion changes of these template files are also updated from the master control and then synchronized to the Master of the nodes. The master control will be responsible for updating and synchronizing the above 7 general initialization template, and also some customized templates or files are agreed to customized by the nodes, which will not be updated by the master controller. This ensures the consistency of some global templates, tools, and files across the entire network and will not be maliciously adjusted or modified. The above-mentioned 7 general templates and the 8th customized template are just examples, and only some general templates may be used. The 8th custom template is set by the node itself. Only the Master host of this node takes over the corresponding machine according to the customized template to complete the corresponding task.

Corresponding to the above template settings, the following basic components are generally deployed on the Master host of each node:
1. Salt-Master, i.e., Salt management and control machine, for receiving and managing a business Salt-Minion machine within the node network.
2. Salt-API/Salt-Minion, for receiving the dispatch tasks of the master control Central machine.
3. Nginx, Salt source of local network area, for ensuring to download and update the Salt-Minion on the intranet of the business machine in this network area.
4. Influxdata time series database, for accessing the monitoring data of all business hosts managed by the Master.
5. Ansible, also deployed in the management and control machine to facilitate the operation and maintenance personnel who are familiar with Ansible to manage.
6. Prometheus, also deployed in the management and control machine, responsible for monitoring and alarming the node resources and peer-to-peer monitoring related services of the Central machine.
7. /opt/sys, with some common management tools generated by default, readable and understandable, used according to needs.

Similarly, the Central control server is correspondingly deployed with basic components as follows:
1. OpenResty Web server.
2. Redis, for recording full data of corresponding user permission-machine of each node.
3. PostgreSQL, for recording user information registered in the system.
4. Matrix dispatch controller, responsible for dispatching Login and Master to execute related tasks.
5. Prometheus monitoring system, responsible for monitoring relates services of Login and Master hosts of respective nodes.

For the above settings, the issuing a task of user permission management and control for the target machine of the node further includes the followings.

The Central control server generates a Local-Login RSA key pairs for users who apply and are authorized, and gives permission to create a user account on the Login host corresponding to the node so that the users have their own independent account, and records permission of the user in the Redis of the master controller, wherein the permission further includes contents such as related node information where the permission is adapted, a Master host, a permission type, and a permission aging length.

The Central control server sends the corresponding task corresponding to the Central to the Login or the Master hosts of related nodes where the permission is adapted.

The Master host receives the task, creates account information of the user, and records user-machine information including the permission aging length into the Redis on the Login of this node corresponding to the node.

Each node initiates a permission recovery program regularly to recycle the user-machine information whose permission has expired on the day to pass the user-machine information that is about to expire at an appointed time;

The corresponding record is deleted in the Redis of the master controller, and a task of the user permission management and control that the Master host of the corresponding node recovers permission of using the machine for the user is issued when the Central control server receives an emergency user permission management including a personnel resignation.

In the invention, the system extends and upgrades Salt Stack's simple one-level management structure Master-Minion to a multi-level management structure Master-Master-Minion (i.e., the basis of distribution). Traditional password authentication is abandoned during user management, the Local-Login RSA key pairs is generated for each user, and the user account for the Login of the corresponding node are created based on the administrator's authorization, so that the users have their own independent accounts. In addition, the simple SaltStack is a stateless task execution; the system adds related tasks such as database storage and performs stateful task execution and management, so that we can clearly record which user has the permission of which Login or Master, and so on. At the same time, on each Master master control machine, a "sentinel" program is developed, which is responsible for monitoring and recording the machine access and offline events of the node where it is located, linkedly updating the configuration file used for local monitoring or batch operation and maintenance, and synchronizing data on the Central control server as summary display such as displaying "how many area nodes are there in total in the system, how many applications are distributed on the nodes, how many machines are used in each application, etc."; the sentinel program is also responsible for writing the monitoring data collected in real time on the local Intranet in both directions, of which one part is written to the local time series database to be recorded, and the other part is written to the remote Central master control cache data as real-time monitoring data for display.

The new machine is configured to manage Salt-Master access of the node where when the new machine is accessed to a certain node: initialization operations of the new machine are completed by running an access machine initialization script of the Master host of the node to give the new machine a standardized name and a Salt-Minion is installed as well as configuring the Master host belonged thereto, and the management for access of the Master host of the node is performed immediately after execution to record the Redis of the node and the Redis of a remote Central control server.

The executing to be configured to manage Salt-Master access of the node where when a new machine is accessed to a certain node further includes: executing a preset publishing machine public key acquisition program to obtain public key information corresponding to the machine from a public key extension file in a preset location of the Redis of the node;
receiving the public key update, by the Master host, to update the new public key information in the public key extension file in the corresponding location of the Redis of the node
by issuing a task of the public key update to the Master host where the related node is located that is adapted to the user permission when the Central Master host generates the Local-Login RSA key pairs or the public key update for the users who apply and are authorized;
obtaining, by the corresponding machine, the corresponding updated public key information of the machine from the public key extension file at the preset location in the Redis of the node at the same time.

The executing a task of daily operation and maintenance of the machine includes: executing to be configured to manage Salt-Master access of the node when a new machine is accessed to a certain node further includes: obtaining a tool script library of a determined location in the Redis of the node to facilitate the synchronized series of a tool script for the user to use, writing a crontab task at the preset location including a disk cleanup task and a salt-minion automatic pull task, and automatically configuring a configuration file at a specified location;
sending, by the Central control machine, an update and/or an extension task including the tool script library, the crontab task, and the configuration file to the Master host of the corresponding node;
updating, by the Master host of the corresponding node, related contents such as the tool script library, the crontab task, and the configuration file corresponding to the specified location;
taking over, by the Master host, the corresponding machine to process contents related to the corresponding locations.

The Central control server sets the build file and the configuration information of the global system, and regularly synchronizes and backs up core data to the Master host of the nodes while synchronizing the build file and the configuration information of the global system to an enterprise Git repository; the build file and the configuration information of the global system are updated to the enterprise Git repository when a problem occurs with the Central control server; a new Login host and a new Master host are obtained and generated from the Central Master host through a template when a problem occurs with a certain Login host or Master host.

In another embodiment of the invention, an operation and maintenance system for automatically and uniformly managing nodes of bastion host is proposed, which further includes:
an architecture of the bastion host divided according to independent network areas of respective business sites to treat each independent network environment in different regions as an independent node, and comprising, in the nodes, a machine as a security entrance Login host of the nodes and a machine as an operation and maintenance management and control Master host of the nodes, the Master being responsible for managing all business hosts of the node;
a Central control server, as a superior Master host of the Login host and the Master host of each independent node, wherein the Central control server is deployed with a WEB system and has a build file and configuration information of a global system, and the Central control server regularly maintains synchronization of related data of the node with the Master host of the nodes, and the Central control machine is used to issue a task to the Master host of the target area node, the task including one of the tasks of issuing user permission management and control, machine monitoring, and daily operation and maintenance for a target machine of the node;
the Master host is used to set a sentinel program to parse and complete operations for the corresponding task when the task is detected.

The Redis is set on the nodes with a determined location stored with a tool script library, a crontab task and a configuration file respectively, the tool script library providing a series of synchronization a tool script for the user to use conveniently; the crontab task comprises a disk cleanup task and a salt-minion automatic pull task;

The Master host is further configured to receive an update and/or an extension task including the tool script library, the crontab task and the configuration file sent from the Central control server to the Master host of the corresponding node, to update the tool script library, the crontab task, the configuration file and other related contents corresponding to the specified location, and then taking over to process the contents related to the corresponding location.

## Claims

1. An operation and maintenance method for automatically and uniformly managing nodes of bastion host, the operation and maintenance method comprising:
S1: setting an architecture of the bastion host divided according to independent network areas of respective business sites to treat each independent network environment in different regions as an independent node, and, in each node, planning a machine as a security entrance Login host (211) of the node and a machine as an operation and maintenance management and control Master host (212) of the node, the Master host (212) being responsible for managing all business hosts (213) of the node;
setting a Central control server (10) as a superior Master host of the Login host (211) and the Master host (212) of each node, wherein the Central control server (10) is deployed with a WEB system and has a build file and configuration information of a global system, and the Central control server (10) regularly maintains synchronization of related data of the corresponding node with the Master host (212) of the nodes;
S2: issuing and executing, by the Central control server (10), a task to the Master host (212) of a target area node, wherein the task comprises one of the tasks of issuing user permission management and control, machine monitoring, and daily operation and maintenance for a target machine of the target area node;
S3: setting a sentinel program, by the Master host (212), to parse and complete operations for the corresponding task when the task is monitored, wherein, when setting the sentinel program for each Master host (212), the sentinel program is responsible for monitoring and recording events such as access and offline of the business host (213) of the node where the sentinel program is located, and jointly updating a configuration file used for local monitoring or batch operation and maintenance, the configuration file used for batch operation and maintenance further comprising a configuration file in the application group dimension; and setting an initialization script of the accessed new machine on the Master host (212) of the nodes;
triggering, by the Master host (212) of a certain node, a Salt-Minion access event once a certain node is accessed to a new business host (213): performing initialization steps comprising naming the new machine according to the three-section rule of application group-intranet IP-network area, installing the Salt-Minion on the new machine and configuring the Master host (212) belonged thereto after the new machine executes the initialization script;
when a certain application group updates operation and maintenance management data, determining the node where the application group is located, obtaining all machine names of the same application group through the Master host (212) of the node where the application group is located according to an application group field, and further writing a batch operation and maintenance management configuration file to the above machines through the Salt-Minion,
deploying a basic component on the Master host (212) of the node, which further comprises: deploying the Salt-Minion to receive a dispatch task from the Central control server (10), deploying a Redis to record the related data corresponding to user permission-machine in the node, and deploying the Salt-Master to receive and manage the business host (213) with the Salt-Minion installed in the node;
not exposing, by the Master host (212) as the operation and maintenance management and control machine in the network area, any ports to the outside, and trusting the network access of the Central control server (10) internally;
synchronizing, by the Central control server (10), respective basic template management after the initial installation of the Login host (211) and the Master host (212) of the nodes is completed: completing, by a # salt -N login state.apply group.login, template synchronization to the Login host (211), and completing, by a # salt -N master state.apply group.master, template synchronization to the Master host (212).

2. The operation and maintenance method for automatically and uniformly managing nodes of bastion host according to claim 1, wherein the task of issuing user permission management and control for a target machine of the target area node further comprises:
by the Central control server (10), generating a Local-Login RSA key pairs for users who apply and are authorized, and giving permission to create a user account on the Login host (211) corresponding to the target area node so that the users have their own independent account, and recording permission of the user in a Redis of a master controller, wherein the permission further comprises contents such as related node information where the permission is adapted, a Master host (212), a permission type, and a permission aging length;
by the Central control server (10), sending the corresponding task to the Login host (211) or the Master host (212) of related nodes where the permission is adapted;
by the Master host (212), receiving the task, creating account information of the user, and recording user-machine information comprising the permission aging length into the Redis on the Login host (211) of the target area node corresponding to the related nodes where the permission is adapted;
by each target area node, initiating a permission recovery program regularly to recycle the user-machine information whose permission has expired on the day to pass the user-machine information that is about to expire at an appointed time;
deleting the corresponding record in the Redis of the master controller, and issuing a task of the user permission management and control that the Master host (212) of the corresponding node recovers permission of using the machine for the user when the Central control server (10) receives an emergency user permission management comprising a personnel resignation.

3. The operation and maintenance method for automatically and uniformly managing nodes of bastion host according to claim 1 or 2, further comprising:
when a new machine is accessed to one of the node, executing to be configured to manage Salt-Master access of the node:
completing initialization operations of the new machine by running an access machine initialization script of the Master host (212) of the node to give the new machine a standardized name, installing a Salt-Minion, configuring the Master host (212) belonged thereto, and performing the management for access of the Master host (212) of the node by the new machine immediately after execution to record the Redis of the node and the Redis of a remote Central control server (10).

4. The operation and maintenance method for automatically and uniformly managing nodes of bastion host according to claim 3, wherein the step of executing to be configured to manage Salt-Master access of the node when the new machine is accessed to one of the node further comprises:
executing a preset publishing machine public key acquisition program to obtain public key information corresponding to the new machine from a public key extension file in a preset location of the Redis of the node;
issuing a task of updating the public key to the Master host (212) where the related node is located that is adapted to the user permission when the Central Master host (212) generates the Local-Login RSA key pairs or updates the public key for the users who apply and are authorized;
receiving the task of updating the public key, by the Master host (212), to update new public key information in the public key extension file in the corresponding location of the Redis of the node;
at the same time, obtaining, by the corresponding machine, the corresponding updated public key information of the new machine from the public key extension file at the preset location in the Redis of the node.

5. The operation and maintenance method for automatically and uniformly managing nodes of bastion host according to claim 3, wherein the step of executing the Master host (212) to complete a task of daily operation and maintenance comprises:
the executing to be configured to manage Salt-Master access of the node where the new machine is located when a new machine is accessed to a certain node further comprises: obtaining a tool script library of a determined location in the Redis of the node to facilitate the synchronized series of a tool script for the user to use, writing a crontab task at the preset location comprising a disk cleanup task and a salt-minion automatic pull task, and automatically configuring a configuration file at a specified location;
sending, by the Central control machine, an update and/or an extension task comprising the tool script library, the crontab task, and the configuration file to the Master host (212) of the corresponding node;
updating, by the Master host (212) of the corresponding node, related contents such as the tool script library, the crontab task, and the configuration file corresponding to the specified location;
taking over, by the Master host (212), the corresponding machine to process contents related to the corresponding locations.

6. The operation and maintenance method for automatically and uniformly managing nodes of bastion host according to claim 1, further comprising:
by the Central control server (10), setting the build file and the configuration information of the global system, and regularly synchronizing and backing up core data to the Master host (212) of the nodes while synchronizing the build file and the configuration information of the global system to an enterprise Git repository;
updating the build file and the configuration information of the global system to the enterprise Git repository when a problem occurs with the Central control server (10);
obtaining and generating a new Login host (211) and a new Master host (212) from the Central Master (10) host through a template when a problem occurs with the Login host (211) or the Master host (212).

7. The operation and maintenance method for automatically and uniformly managing nodes of bastion host according to claim 1, further comprising:
by the Central control server (10) as a dispatch center, managing the Login host (211) and the Master host (212) of respective independent nodes to indirectly and uniformly manage the host of the nodes;
by the Central control server (10), deploying the WEB system to consolidate various daily necessary functions, unifying the various collected data as a data overview to display IT resources of the nodes, and displaying real-time monitoring of related data according to an application grouping dimension.

8. The operation and maintenance method for automatically and uniformly managing nodes of bastion host according to claim 1, further comprising:
automatically generating a monitoring configuration file of Prometheus on the business host (213);
by the local Master host (212), detecting an alarm message, and synchronizing the alarm information comprising a host name where the alarm is located to the Central control server (10);
by the Central control server (10), parsing the application group and the network area where the alarm information host is located through the host name where the alarm information occurs;
issuing the corresponding execution task to the Master host (212) of the node that is adapted if the corresponding business host (213) of the network area and/or the application group needs to be processed according to the alarm information.

9. The operation and maintenance method for automatically and uniformly managing nodes of bastion host according to claim 1, further comprising:
finding the Master host (212) belonged thereto according to the network area field and performing the corresponding task when the Central control machine parses the business host (213) name;
completing naming the new machine according to the three-section rule of the application group-intranet IP-network area after the new machine executes the initialization script, the network areas having an independently named intranet IP, the intranet IPs in different network areas being the same.

10. The operation and maintenance method for automatically and uniformly managing nodes of bastion host according to claim 1, further comprising:
exposing, by the Login host (211) as the security entrance machine of the node where the Login host (211) is located, a standard sshd port to the outside so that the user is assigned a login_id_rsa to log in to the corresponding Login host (211) to enter an intranet of the node where the Login host (211) is located.

11. An operation and maintenance system for automatically and uniformly managing nodes of bastion host, the operation and maintenance system comprising:
an architecture of the bastion host divided according to independent network areas of respective business sites to treat each independent network environment in different regions as an independent node, and in the nodes, a machine as a security entrance Login host (211) of the nodes and a machine as an operation and maintenance management and control Master host (212) of the nodes, the Master host (212) being responsible for managing all business hosts (213) of the node;
a Central control server (10), as a superior Master host of the Login host (211) and the Master host (212) of each node, wherein the Central control server (10) is deployed with a WEB system and has a build file and configuration information of a global system, and the Central control server (10) regularly maintains synchronization of related data of the corresponding node with the Master host (212) of the nodes, and the Central control machine is used to issue a task to the Master host (212) of the target area node, the task comprising one of the tasks of issuing user permission management and control, machine monitoring, and daily operation and maintenance for a target machine of the target area node;
the Master host (212) is used to set a sentinel program to parse and complete operations for the corresponding task when the task is detected, wherein, when setting the sentinel program for each Master host (212), the sentinel program is responsible for monitoring and recording events such as access and offline of the business host (213) of the node where the sentinel program is located, and jointly updating a configuration file used for local monitoring or batch operation and maintenance, the configuration file used for batch operation and maintenance further comprising a configuration file in the application group dimension; and setting an initialization script of the accessed new machine on the Master host (212) of the nodes;
the Master host (212) of a certain node is configured to trigger a Salt-Minion access event once a certain node is accessed to a new business host (213): perform initialization steps comprising naming the new machine according to the three-section rule of application group-intranet IP-network area, installing the Salt-Minion on the new machine and configuring the Master host (212) belonged thereto after the new machine executes the initialization script;
the Central control server (10) is configured to:
when a certain application group updates operation and maintenance management data, determine the node where the application group is located, obtain all machine names of the same application group through the Master host (212) of the node where the application group is located according to an application group field, and further write a batch operation and maintenance management configuration file to the above machines through the Salt-Minion,
deploy a basic component on the Master host (212) of the node, which further comprises: deploying the Salt-Minion to receive a dispatch task from the Central control server (10), deploying a Redis to record the related data corresponding to user permission-machine in the node, and deploying the Salt-Master to receive and manage the business host (213) with the Salt-Minion installed in the node;
synchronize respective basic template management after the initial installation of the Login host (211) and the Master host (212) of the nodes is completed: completing, by a # salt -N login state.apply group.login, template synchronization to the Login host (211), and completing, by a # salt -N master state.apply group.master, template synchronization to the Master host (212),
wherein the Master host (212) as the operation and maintenance management and control machine in the network area is configured for not exposing any ports to the outside, and trusting the network access of the Central control server (10) internally.

12. The operation and maintenance system for automatically and uniformly managing nodes of bastion host according to claim 11, wherein,
the Redis is set on the nodes with a determined location stored with a tool script library, a crontab task and a configuration file respectively, the tool script library providing a series of synchronization a tool script for the user to use conveniently; the crontab task comprises a disk cleanup task and a salt-minion automatic pull task;
the Master host (212) is further configured to receive an update and/or an extension task comprising the tool script library, the crontab task and the configuration file sent from the Central control server (10) to the Master host (212) of the corresponding node, to update the tool script library, the crontab task, the configuration file and other related contents corresponding to the specified location, and then taking over to process the contents related to the corresponding location.

## Patentansprüche

1. **Betriebs- und Wartungsverfahren zur automatischen und einheitlichen Verwaltung von Knoten eines Bastion-Hosts, wobei das Betriebs- und Wartungsverfahren umfasst:**
• **S1:** Einrichten einer Architektur des Bastion-Hosts, die gemäß unabhängigen Netzwerkbereichen jeweiliger Geschäftsstandorte unterteilt ist, um jede unabhängige Netzwerkumgebung in verschiedenen Regionen als einen unabhängigen Knoten zu behandeln, und Planen, in jedem Knoten, einer Maschine als Sicherheitszugangs-Login-Host (211) des Knotens und einer Maschine als Betriebs- und Wartungsverwaltungs- und -steuerungs-Master-Host (212) des Knotens, wobei der Master-Host (212) für die Verwaltung aller Business-Hosts (213) des Knotens verantwortlich ist;
• Einrichten eines zentralen Steuerungsservers (10) als übergeordneten Master-Host des Login-Hosts (211) und des Master-Hosts (212) jedes Knotens, wobei auf dem zentralen Steuerungsserver (10) ein WEB-System bereitgestellt ist und dieser eine Build-Datei und Konfigurationsinformationen eines globalen Systems aufweist, und der zentrale Steuerungsserver (10) regelmäßig die Synchronisation zugehöriger Daten des entsprechenden Knotens mit dem Master-Host (212) der Knoten aufrechterhält;
• **S2:** Ausgeben und Ausführen, durch den zentralen Steuerungsserver (10), einer Aufgabe an den Master-Host (212) eines Zielbereichsknotens, wobei die Aufgabe eine der Aufgaben zur Ausgabe von Benutzerberechtigungsverwaltung und - steuerung, Maschinenüberwachung und täglichem Betrieb und Wartung für eine Zielmaschine des Zielbereichsknotens umfasst;
• **S3:** Einrichten eines Sentinel-Programms durch den Master-Host (212), um Operationen für die entsprechende Aufgabe zu parsen und abzuschließen, wenn die Aufgabe überwacht wird, wobei beim Einrichten des Sentinel-Programms für jeden Master-Host (212) das Sentinel-Programm für das Überwachen und Aufzeichnen von Ereignissen wie Zugriff und Offline-Gehen des Business-Hosts (213) des Knotens, in dem sich das Sentinel-Programm befindet, und das gemeinsame Aktualisieren einer Konfigurationsdatei, die für die lokale Überwachung oder Stapelbetriebs- und -wartung verwendet wird, verantwortlich ist, wobei die für Stapelbetriebs- und -wartung verwendete Konfigurationsdatei ferner eine Konfigurationsdatei in der Anwendungsgruppendimension umfasst; und Einrichten eines Initialisierungsskripts der zugegriffenen neuen Maschine auf dem Master-Host (212) der Knoten;
• Auslösen, durch den Master-Host (212) eines bestimmten Knotens, eines Salt-Minion-Zugriffsereignisses, sobald ein bestimmter Knoten auf einen neuen Business-Host (213) zugreift: Durchführen von Initialisierungsschritten, die das Benennen der neuen Maschine gemäß der dreiteiligen Regel aus Anwendungsgruppe-Intranet-IP-Netzwerkbereich, das Installieren des Salt-Minions auf der neuen Maschine und das Konfigurieren des zugehörigen Master-Hosts (212) umfassen, nachdem die neue Maschine das Initialisierungsskript ausgeführt hat;
• wenn eine bestimmte Anwendungsgruppe Betriebs- und Wartungsverwaltungsdaten aktualisiert, Bestimmen des Knotens, in dem sich die Anwendungsgruppe befindet, Erhalten aller Maschinennamen derselben Anwendungsgruppe über den Master-Host (212) des entsprechenden Knotens gemäß einem Anwendungsgruppenfeld, und ferner Schreiben einer Stapelbetriebs- und -wartungsverwaltungskonfigurationsdatei auf die obigen Maschinen über den Salt-Minion;
• Bereitstellen einer Basiskomponente auf dem Master-Host (212) des Knotens, was ferner umfasst: Bereitstellen des Salt-Minions zum Empfangen einer Dispatch-Aufgabe vom zentralen Steuerungsserver (10), Bereitstellen eines Redis zum Aufzeichnen der zugehörigen Daten entsprechend der Benutzerberechtigungs-Maschine im Knoten, und Bereitstellen des Salt-Masters zum Empfangen und Verwalten des Business-Hosts (213) mit dem im Knoten installierten Salt-Minion;
• Nicht-Exponieren, durch den Master-Host (212) als die Betriebs- und Wartungsverwaltungs- und -steuerungsmaschine im Netzwerkbereich, jeglicher Ports nach außen, und internes Vertrauen auf den Netzwerkzugriff des zentralen Steuerungsservers (10);
• Synchronisieren, durch den zentralen Steuerungsserver (10), der jeweiligen Basis-Vorlagenverwaltung, nachdem die Erstinstallation des Login-Hosts (211) und des Master-Hosts (212) der Knoten abgeschlossen ist: Durchführen, durch ein # salt - N login state.apply group.login, einer Vorlagensynchronisation mit dem Login-Host (211), und Durchführen, durch ein # salt -N master state.apply group.master, einer Vorlagensynchronisation mit dem Master-Host (212).

2. **Betriebs- und Wartungsverfahren zur automatischen und einheitlichen Verwaltung von Knoten eines Bastion-Hosts nach Anspruch 1, wobei die Aufgabe der Ausgabe von Benutzerberechtigungsverwaltung und -steuerung für eine Zielmaschine des Zielbereichsknotens ferner umfasst:**
• durch den zentralen Steuerungsserver (10), Erzeugen eines Local-Login-RSA-Schlüsselpaars für Benutzer, die einen Antrag stellen und autorisiert sind, und Erteilen der Berechtigung zum Erstellen eines Benutzerkontos auf dem dem Zielbereichsknoten entsprechenden Login-Host (211), so dass die Benutzer ihr eigenes unabhängiges Konto haben, und Aufzeichnen der Berechtigung des Benutzers in einem Redis einer Hauptsteuerung, wobei die Berechtigung ferner Inhalte wie zugehörige Knoteninformationen, an denen die Berechtigung angepasst ist, einen Master-Host (212), einen Berechtigungstyp und eine Berechtigungsgültigkeitsdauer umfasst;
• durch den zentralen Steuerungsserver (10), Senden der entsprechenden Aufgabe an den Login-Host (211) oder den Master-Host (212) zugehöriger Knoten, an denen die Berechtigung angepasst ist;
• durch den Master-Host (212), Empfangen der Aufgabe, Erstellen von Kontoinformationen des Benutzers und Aufzeichnen von Benutzer-Maschinen-Informationen einschließlich der Berechtigungsgültigkeitsdauer in das Redis auf dem Login-Host (211) des Zielbereichsknotens, der den zugehörigen Knoten entspricht, an denen die Berechtigung angepasst ist;
• durch jeden Zielbereichsknoten, regelmäßiges Initiieren eines Berechtigungswiederherstellungsprogramms, um die Benutzer-Maschinen-Informationen, deren Berechtigung am selben Tag abgelaufen ist, zu recyceln, um die Benutzer-Maschinen-Informationen zu übergeben, die zu einem festgelegten Zeitpunkt ablaufen werden;
• Löschen des entsprechenden Eintrags im Redis der Hauptsteuerung und Ausgeben einer Aufgabe der Benutzerberechtigungsverwaltung und -steuerung, dass der Master-Host (212) des entsprechenden Knotens die Berechtigung zur Nutzung der Maschine für den Benutzer wiederherstellt, wenn der zentrale Steuerungsserver (10) eine Notfall-Benutzerberechtigungsverwaltung empfängt, die ein Ausscheiden von Personal umfasst.

3. **Betriebs- und Wartungsverfahren zur automatischen und einheitlichen Verwaltung von Knoten eines Bastion-Hosts nach Anspruch 1 oder 2, ferner umfassend:**
• wenn auf einen der Knoten eine neue Maschine zugreift, Ausführen einer Konfiguration zur Verwaltung des Salt-Master-Zugriffs des Knotens:
• Abschließen von Initialisierungsoperationen der neuen Maschine durch Ausführen eines Zugriffsmaschinen-Initialisierungsskripts des Master-Hosts (212) des Knotens, um der neuen Maschine einen standardisierten Namen zu geben, Installieren eines Salt-Minions, Konfigurieren des zugehörigen Master-Hosts (212) und Durchführen der Verwaltung für den Zugriff des Master-Hosts (212) des Knotens durch die neue Maschine unmittelbar nach der Ausführung, um das Redis des Knotens und das Redis eines entfernten zentralen Steuerungsservers (10) aufzuzeichnen.

4. **Betriebs- und Wartungsverfahren zur automatischen und einheitlichen Verwaltung von Knoten eines Bastion-Hosts nach Anspruch 3, wobei der Schritt des Ausführens der Konfiguration zur Verwaltung des Salt-Master-Zugriffs des Knotens, wenn auf einen der Knoten eine neue Maschine zugreift, ferner umfasst:**
• Ausführen eines vordefinierten Veröffentlichungsmaschinen-Öffentlicher-Schlüssel-Erfassungsprogramms, um Informationen über den öffentlichen Schlüssel entsprechend der neuen Maschine aus einer Erweiterungsdatei für den öffentlichen Schlüssel an einem vordefinierten Ort des Redis des Knotens zu erhalten;
• Ausgeben einer Aufgabe zur Aktualisierung des öffentlichen Schlüssels an den Master-Host (212), an dem sich der zugehörige Knoten befindet, der an die Benutzerberechtigung angepasst ist, wenn der zentrale Master-Host die Local-Login-RSA-Schlüsselpaare erzeugt oder den öffentlichen Schlüssel für die Benutzer aktualisiert, die einen Antrag stellen und autorisiert sind;
• Empfangen der Aufgabe zur Aktualisierung des öffentlichen Schlüssels durch den Master-Host (212), um die neuen Informationen über den öffentlichen Schlüssel in der Erweiterungsdatei für den öffentlichen Schlüssel an dem entsprechenden Ort des Redis des Knotens zu aktualisieren;
• gleichzeitig, Erhalten, durch die entsprechende Maschine, der entsprechenden aktualisierten Informationen über den öffentlichen Schlüssel der neuen Maschine aus der Erweiterungsdatei für den öffentlichen Schlüssel an dem vordefinierten Ort im Redis des Knotens.

5. **Betriebs- und Wartungsverfahren zur automatischen und einheitlichen Verwaltung von Knoten eines Bastion-Hosts nach Anspruch 3, wobei der Schritt des Ausführens des Master-Hosts (212) zum Abschließen einer Aufgabe des täglichen Betriebs und der Wartung umfasst:**
• wobei das Ausführen der Konfiguration zur Verwaltung des Salt-Master-Zugriffs des Knotens, an dem sich die neue Maschine befindet, wenn auf einen bestimmten Knoten eine neue Maschine zugreift, ferner umfasst: Erhalten einer Werkzeugskriptbibliothek eines bestimmten Ortes im Redis des Knotens, um die synchronisierte Reihe eines Werkzeugskripts für den Benutzer zur bequemen Verwendung bereitzustellen, Schreiben einer Crontab-Aufgabe an dem vordefinierten Ort, die eine Bereinigungsaufgabe für die Festplatte und eine automatische Salt-Minion-Pull-Aufgabe umfasst, und automatisches Konfigurieren einer Konfigurationsdatei an einem spezifizierten Ort;
• Senden, durch die zentrale Steuerungsmaschine, einer Aktualisierungs- und/oder Erweiterungsaufgabe, welche die Werkzeugskriptbibliothek, die Crontab-Aufgabe und die Konfigurationsdatei umfasst, an den Master-Host (212) des entsprechenden Knotens;
• Aktualisieren, durch den Master-Host (212) des entsprechenden Knotens, zugehöriger Inhalte wie der Werkzeugskriptbibliothek, die Crontab-Aufgabe und die Konfigurationsdatei entsprechend dem spezifizierten Ort;
• Übernehmen, durch den Master-Host (212), der entsprechenden Maschine zur Verarbeitung von Inhalten, die sich auf die entsprechenden Orte beziehen.

6. **Betriebs- und Wartungsverfahren zur automatischen und einheitlichen Verwaltung von Knoten eines Bastion-Hosts nach Anspruch 1, ferner umfassend:**
• durch den zentralen Steuerungsserver (10), Einrichten der Build-Datei und der Konfigurationsinformationen des globalen Systems und regelmäßiges Synchronisieren und Sichern von Kerndaten auf dem Master-Host (212) der Knoten, während die Build-Datei und die Konfigurationsinformationen des globalen Systems mit einem Git-Repository des Unternehmens synchronisiert werden;
• Aktualisieren der Build-Datei und der Konfigurationsinformationen des globalen Systems im Git-Repository des Unternehmens, wenn ein Problem mit dem zentralen Steuerungsserver (10) auftritt;
• Erhalten und Erzeugen eines neuen Login-Hosts (211) und eines neuen Master-Hosts (212) vom zentralen Steuerungsserver (10) über eine Vorlage, wenn ein Problem mit dem Login-Host (211) oder dem Master-Host (212) auftritt.

7. **Betriebs- und Wartungsverfahren zur automatischen und einheitlichen Verwaltung von Knoten eines Bastion-Hosts nach Anspruch 1, ferner umfassend:**
• durch den zentralen Steuerungsserver (10) als Dispatch-Zentrum, Verwalten des Login-Hosts (211) und des Master-Hosts (212) jeweiliger unabhängiger Knoten, um den Host des Knotens indirekt und einheitlich zu verwalten;
• durch den zentralen Steuerungsserver (10), Bereitstellen des WEB-Systems, um verschiedene täglich notwendige Funktionen zu konsolidieren, Vereinheitlichen der verschiedenen gesammelten Daten als Datenübersicht zur Anzeige von IT-Ressourcen aller Knoten, und Anzeigen einer Echtzeitüberwachung zugehöriger Daten gemäß einer Anwendungsgruppendimension.

8. **Betriebs- und Wartungsverfahren zur automatischen und einheitlichen Verwaltung von Knoten eines Bastion-Hosts nach Anspruch 1, ferner umfassend:**
• automatisches Erzeugen einer Überwachungskonfigurationsdatei von Prometheus auf dem Business-Host (213);
• durch den lokalen Master-Host (212), Erkennen einer Alarmmeldung und Synchronisieren der Alarminformationen einschließlich eines Hostnamens, an dem sich der Alarm befindet, mit dem zentralen Steuerungsserver (10);
• durch den zentralen Steuerungsserver (10), Parsen der Anwendungsgruppe und des Netzwerkbereichs, in dem sich der Alarminformations-Host befindet, über den Hostnamen, an dem die Alarminformation auftritt;
• Ausgeben der entsprechenden Ausführungsaufgabe an den Master-Host (212) des Knotens, der angepasst ist, falls der entsprechende Business-Host (213) des Netzwerkbereichs und/oder die Anwendungsgruppe gemäß den Alarminformationen verarbeitet werden muss.

9. **Betriebs- und Wartungsverfahren zur automatischen und einheitlichen Verwaltung von Knoten eines Bastion-Hosts nach Anspruch 1, ferner umfassend:**
• Finden des zugehörigen Master-Hosts (212) gemäß dem Netzwerkbereichsfeld und Durchführen der entsprechenden Aufgabe, wenn die zentrale Steuerungsmaschine den Namen des Business-Hosts (213) parst;
• Abschließen der Benennung der neuen Maschine gemäß der dreiteiligen Regel aus Anwendungsgruppe-Intranet-IP-Netzwerkbereich, nachdem die neue Maschine das Initialisierungsskript ausgeführt hat, wobei die Netzwerkbereiche eine unabhängig benannte Intranet-IP aufweisen und die Intranet-IPs in verschiedenen Netzwerkbereichen gleich sind.

10. **Betriebs- und Wartungsverfahren zur automatischen und einheitlichen Verwaltung von Knoten eines Bastion-Hosts nach Anspruch 1, ferner umfassend:**
• Exponieren, durch den Login-Host (211) als die Sicherheitszugangsmaschine des Knotens, an dem sich der Login-Host (211) befindet, eines Standard-sshd-Ports nach außen, so dass dem Benutzer ein login_id_rsa zugewiesen wird, um sich am entsprechenden Login-Host (211) anzumelden, um in ein Intranet des Knotens zu gelangen, an dem sich der Login-Host (211) befindet.

11. **Betriebs- und Wartungssystem zur automatischen und einheitlichen Verwaltung von Knoten eines Bastion-Hosts, wobei das Betriebs- und Wartungssystem umfasst:**
• eine Architektur des Bastion-Hosts, die gemäß unabhängigen Netzwerkbereichen jeweiliger Geschäftsstandorte unterteilt ist, um jede unabhängige Netzwerkumgebung in verschiedenen Regionen als einen unabhängigen Knoten zu behandeln, und in den Knoten eine Maschine als Sicherheitszugangs-Login-Host (211) der Knoten und eine Maschine als Betriebs- und Wartungsverwaltungs- und -steuerungs-Master-Host (212) der Knoten, wobei der Master-Host (212) für die Verwaltung aller Business-Hosts (213) des Knotens verantwortlich ist;
• einen zentralen Steuerungsserver (10) als übergeordneten Master-Host des Login-Hosts (211) und des Master-Hosts (212) jedes Knotens, wobei auf dem zentralen Steuerungsserver (10) ein WEB-System bereitgestellt ist und dieser eine Build-Datei und Konfigurationsinformationen eines globalen Systems aufweist, und der zentrale Steuerungsserver (10) regelmäßig die Synchronisation zugehöriger Daten des entsprechenden Knotens mit dem Master-Host (212) der Knoten aufrechterhält, und die zentrale Steuerungsmaschine verwendet wird, um eine Aufgabe an den Master-Host (212) des Zielbereichsknotens auszugeben, wobei die Aufgabe eine der Aufgaben zur Ausgabe von Benutzerberechtigungsverwaltung und -steuerung, Maschinenüberwachung und täglichem Betrieb und Wartung für eine Zielmaschine des Zielbereichsknotens umfasst;
• wobei der Master-Host (212) verwendet wird, um ein Sentinel-Programm einzurichten, um Operationen für die entsprechende Aufgabe zu parsen und abzuschließen, wenn die Aufgabe erkannt wird, wobei beim Einrichten des Sentinel-Programms für jeden Master-Host (212) das Sentinel-Programm für das Überwachen und Aufzeichnen von Ereignissen wie Zugriff und Offline-Gehen des Business-Hosts (213) des Knotens, in dem sich das Sentinel-Programm befindet, und das gemeinsame Aktualisieren einer Konfigurationsdatei, die für die lokale Überwachung oder Stapelbetriebs- und -wartung verwendet wird, verantwortlich ist, wobei die für Stapelbetriebs- und -wartung verwendete Konfigurationsdatei ferner eine Konfigurationsdatei in der Anwendungsgruppendimension umfasst; und Einrichten eines Initialisierungsskripts der zugegriffenen neuen Maschine auf dem Master-Host (212) der Knoten;
• wobei der Master-Host (212) eines bestimmten Knotens konfiguriert ist, um ein Salt-Minion-Zugriffsereignis auszulösen, sobald ein bestimmter Knoten auf einen neuen Business-Host (213) zugreift: Initialisierungsschritte durchzuführen, die das Benennen der neuen Maschine gemäß der dreiteiligen Regel aus Anwendungsgruppe-Intranet-IP-Netzwerkbereich, das Installieren des Salt-Minions auf der neuen Maschine und das Konfigurieren des zugehörigen Master-Hosts (212) umfassen, nachdem die neue Maschine das Initialisierungsskript ausgeführt hat;
• wobei der zentrale Steuerungsserver (10) konfiguriert ist, um:
∘ wenn eine bestimmte Anwendungsgruppe Betriebs- und Wartungsverwaltungsdaten aktualisiert, den Knoten zu bestimmen, in dem sich die Anwendungsgruppe befindet, alle Maschinennamen derselben Anwendungsgruppe über den Master-Host (212) des Knotens, in dem sich die Anwendungsgruppe befindet, gemäß einem Anwendungsgruppenfeld zu erhalten, und ferner eine Stapelbetriebs- und - wartungsverwaltungskonfigurationsdatei auf die obigen Maschinen über den Salt-Minion zu schreiben,
∘ eine Basiskomponente auf dem Master-Host (212) des Knotens bereitzustellen, was ferner umfasst: Bereitstellen des Salt-Minions zum Empfangen einer Dispatch-Aufgabe vom zentralen Steuerungsserver (10), Bereitstellen eines Redis zum Aufzeichnen der zugehörigen Daten entsprechend der Benutzerberechtigungs-Maschine im Knoten, und Bereitstellen des Salt-Masters zum Empfangen und Verwalten des Business-Hosts (213) mit dem im Knoten installierten Salt-Minion;
∘ die jeweilige Basis-Vorlagenverwaltung zu synchronisieren, nachdem die Erstinstallation des Login-Hosts (211) und des Master-Hosts (212) der Knoten abgeschlossen ist: Durchführen, durch ein # salt -N login state.apply group.login, einer Vorlagensynchronisation mit dem Login-Host (211), und Durchführen, durch ein # salt -N master state.apply group.master, einer Vorlagensynchronisation mit dem Master-Host (212),
• wobei der Master-Host (212) als die Betriebs- und Wartungsverwaltungs- und - steuerungsmaschine im Netzwerkbereich konfiguriert ist, um keine Ports nach außen zu exponieren und intern auf den Netzwerkzugriff des zentralen Steuerungsservers (10) zu vertrauen.

12. **Betriebs- und Wartungssystem zur automatischen und einheitlichen Verwaltung von Knoten eines Bastion-Hosts nach Anspruch 11, wobei:**
• das Redis auf den Knoten an einem bestimmten Ort eingerichtet ist, an dem jeweils eine Werkzeugskriptbibliothek, eine Crontab-Aufgabe und eine Konfigurationsdatei gespeichert sind, wobei die Werkzeugskriptbibliothek eine Reihe von Synchronisations-Werkzeugskripten zur bequemen Verwendung durch den Benutzer bereitstellt; die Crontab-Aufgabe eine Bereinigungsaufgabe für die Festplatte und eine automatische Salt-Minion-Pull-Aufgabe umfasst;
• der Master-Host (212) ferner konfiguriert ist, um eine Aktualisierungs- und/oder Erweiterungsaufgabe zu empfangen, welche die Werkzeugskriptbibliothek, die Crontab-Aufgabe und die Konfigurationsdatei umfasst, die vom zentralen Steuerungsserver (10) an den Master-Host (212) des entsprechenden Knotens gesendet wurden, um die Werkzeugskriptbibliothek, die Crontab-Aufgabe, die Konfigurationsdatei und andere zugehörige Inhalte entsprechend dem spezifizierten Ort zu aktualisieren, und dann die Verarbeitung der Inhalte zu übernehmen, die sich auf den entsprechenden Ort beziehen.

## Revendications

1. **Procédé d'exploitation et de maintenance pour gérer automatiquement et uniformément des nœuds d'un hôte bastion, le procédé d'exploitation et de maintenance comprenant :**
• **S1 :** la configuration d'une architecture de l'hôte bastion divisée selon des zones de réseau indépendantes de sites commerciaux respectifs pour traiter chaque environnement de réseau indépendant dans différentes régions comme un nœud indépendant, et, dans chaque nœud, la planification d'une machine en tant qu'hôte de connexion (Login host) d'entrée de sécurité (211) du nœud et d'une machine en tant qu'hôte maître (Master host) de gestion et de commande d'exploitation et de maintenance (212) du nœud, l'hôte maître (212) étant chargé de gérer tous les hôtes métiers (213) du nœud ;
• la configuration d'un serveur de commande central (10) en tant qu'hôte maître supérieur de l'hôte de connexion (211) et de l'hôte maître (212) de chaque nœud, dans lequel le serveur de commande central (10) est déployé avec un système WEB et possède un fichier de construction et des informations de configuration d'un système global, et le serveur de commande central (10) maintient régulièrement la synchronisation de données associées du nœud correspondant avec l'hôte maître (212) des nœuds ;
• **S2 :** l'émission et l'exécution, par le serveur de commande central (10), d'une tâche vers l'hôte maître (212) d'un nœud de zone cible, dans lequel la tâche comprend l'une des tâches d'émission de gestion et de commande d'autorisations d'utilisateur, de surveillance de machine, et d'exploitation et de maintenance quotidiennes pour une machine cible du nœud de zone cible ;
• **S3 :** la configuration d'un programme sentinelle, par l'hôte maître (212), pour analyser et achever des opérations pour la tâche correspondante lorsque la tâche est surveillée, dans lequel, lors de la configuration du programme sentinelle pour chaque hôte maître (212), le programme sentinelle est chargé de surveiller et d'enregistrer des événements tels que l'accès et la déconnexion de l'hôte métier (213) du nœud où se trouve le programme sentinelle, et de mettre à jour conjointement un fichier de configuration utilisé pour la surveillance locale ou l'exploitation et la maintenance par lots, le fichier de configuration utilisé pour l'exploitation et la maintenance par lots comprenant en outre un fichier de configuration dans la dimension de groupe d'applications ; et la configuration d'un script d'initialisation de la nouvelle machine accédée sur l'hôte maître (212) des nœuds ;
• le déclenchement, par l'hôte maître (212) d'un certain nœud, d'un événement d'accès Salt-Minion une fois qu'un certain nœud accède à un nouvel hôte métier (213) : l'exécution d'étapes d'initialisation comprenant le nommage de la nouvelle machine selon la règle en trois sections de groupe d'applications-IP intranet-zone de réseau, l'installation du Salt-Minion sur la nouvelle machine et la configuration de l'hôte maître (212) auquel elle appartient après que la nouvelle machine a exécuté le script d'initialisation ;
• lorsqu'un certain groupe d'applications met à jour des données de gestion d'exploitation et de maintenance, la détermination du nœud où se trouve le groupe d'applications, l'obtention de tous les noms de machine du même groupe d'applications par l'intermédiaire de l'hôte maître (212) du nœud correspondant selon un champ de groupe d'applications, et l'écriture supplémentaire d'un fichier de configuration de gestion d'exploitation et de maintenance par lots sur les machines ci-dessus par l'intermédiaire du Salt-Minion ;
• le déploiement d'un composant de base sur l'hôte maître (212) du nœud, qui comprend en outre : le déploiement du Salt-Minion pour recevoir une tâche de répartition provenant du serveur de commande central (10), le déploiement d'un Redis pour enregistrer les données associées correspondant à l'autorisation d'utilisateur-machine dans le nœud, et le déploiement du Salt-Master pour recevoir et gérer l'hôte métier (213) avec le Salt-Minion installé dans le nœud ;
• la non-exposition, par l'hôte maître (212) en tant que machine de gestion et de commande d'exploitation et de maintenance dans la zone de réseau, de ports vers l'extérieur, et l'établissement d'une confiance interne envers l'accès réseau du serveur de commande central (10) ;
• la synchronisation, par le serveur de commande central (10), de la gestion de modèles de base respectifs après que l'installation initiale de l'hôte de connexion (211) et de l'hôte maître (212) des nœuds est achevée : l'achèvement, par un # salt -N login state.apply group.login, de la synchronisation de modèle vers l'hôte de connexion (211), et l'achèvement, par un # salt -N master state.apply group.master, de la synchronisation de modèle vers l'hôte maître (212).

2. **Procédé d'exploitation et de maintenance pour gérer automatiquement et uniformément des nœuds d'un hôte bastion selon la revendication 1, dans lequel la tâche d'émission de gestion et de commande d'autorisations d'utilisateur pour une machine cible du nœud de zone cible comprend en outre :**
• par le serveur de commande central (10), la génération d'une paire de clés RSA de connexion locale (Local-Login) pour les utilisateurs qui en font la demande et sont autorisés, et l'octroi de l'autorisation de créer un compte utilisateur sur l'hôte de connexion (211) correspondant au nœud de zone cible de sorte que les utilisateurs disposent de leur propre compte indépendant, et l'enregistrement de l'autorisation de l'utilisateur dans un Redis d'un contrôleur maître, dans lequel l'autorisation comprend en outre des contenus tels que des informations de nœud associées où l'autorisation est adaptée, un hôte maître (212), un type d'autorisation, et une durée de validité d'autorisation ;
• par le serveur de commande central (10), l'envoi de la tâche correspondante à l'hôte de connexion (211) ou à l'hôte maître (212) de nœuds associés où l'autorisation est adaptée ;
• par l'hôte maître (212), la réception de la tâche, la création d'informations de compte de l'utilisateur, et l'enregistrement d'informations utilisateur-machine comprenant la durée de validité d'autorisation dans le Redis sur l'hôte de connexion (211) du nœud de zone cible correspondant aux nœuds associés où l'autorisation est adaptée ;
• par chaque nœud de zone cible, le lancement régulier d'un programme de récupération d'autorisations pour recycler les informations utilisateur-machine dont l'autorisation a expiré le jour même afin de transmettre à un moment fixé les informations utilisateur-machine qui sont sur le point d'expirer ;
• la suppression de l'enregistrement correspondant dans le Redis du contrôleur maître, et l'émission d'une tâche de gestion et de commande d'autorisations d'utilisateur par laquelle l'hôte maître (212) du nœud correspondant récupère l'autorisation d'utiliser la machine pour l'utilisateur lorsque le serveur de commande central (10) reçoit une gestion d'autorisations d'utilisateur d'urgence comprenant une démission de personnel.

3. **Procédé d'exploitation et de maintenance pour gérer automatiquement et uniformément des nœuds d'un hôte bastion selon la revendication 1 ou 2, comprenant en outre :**
• lorsqu'une nouvelle machine accède à l'un des nœuds, l'exécution d'une configuration pour gérer l'accès Salt-Master du nœud :
• l'achèvement d'opérations d'initialisation de la nouvelle machine en exécutant un script d'initialisation de machine d'accès de l'hôte maître (212) du nœud pour donner à la nouvelle machine un nom normalisé, l'installation d'un Salt-Minion, la configuration de l'hôte maître (212) auquel elle appartient, et l'exécution de la gestion pour l'accès de l'hôte maître (212) du nœud par la nouvelle machine immédiatement après exécution pour enregistrer le Redis du nœud et le Redis d'un serveur de commande central (10) distant.

4. **Procédé d'exploitation et de maintenance pour gérer automatiquement et uniformément des nœuds d'un hôte bastion selon la revendication 3, dans lequel l'étape d'exécution de la configuration pour gérer l'accès Salt-Master du nœud lorsqu'une nouvelle machine accède à l'un des nœuds comprend en outre :**
• l'exécution d'un programme prédéfini d'acquisition de clé publique de machine de publication pour obtenir des informations de clé publique correspondant à la nouvelle machine à partir d'un fichier d'extension de clé publique dans un emplacement prédéfini du Redis du nœud ;
• l'émission d'une tâche de mise à jour de la clé publique vers l'hôte maître (212) où se trouve le nœud associé qui est adapté à l'autorisation d'utilisateur lorsque le serveur maître central génère les paires de clés RSA de connexion locale ou met à jour la clé publique pour les utilisateurs qui en font la demande et sont autorisés ;
• la réception de la tâche de mise à jour de la clé publique, par l'hôte maître (212), pour mettre à jour les nouvelles informations de clé publique dans le fichier d'extension de clé publique dans l'emplacement correspondant du Redis du nœud ;
• en même temps, l'obtention, par la machine correspondante, des informations de clé publique mises à jour correspondantes de la nouvelle machine à partir du fichier d'extension de clé publique à l'emplacement prédéfini dans le Redis du nœud.

5. **Procédé d'exploitation et de maintenance pour gérer automatiquement et uniformément des nœuds d'un hôte bastion selon la revendication 3, dans lequel l'étape d'exécution de l'hôte maître (212) pour achever une tâche d'exploitation et de maintenance quotidiennes comprend :**
• l'exécution de la configuration pour gérer l'accès Salt-Master du nœud où se trouve la nouvelle machine lorsqu'une nouvelle machine accède à un certain nœud comprend en outre : l'obtention d'une bibliothèque de scripts d'outils d'un emplacement déterminé dans le Redis du nœud pour faciliter la série synchronisée d'un script d'outil à utiliser par l'utilisateur, l'écriture d'une tâche crontab à l'emplacement prédéfini comprenant une tâche de nettoyage de disque et une tâche d'extraction automatique de salt-minion, et la configuration automatique d'un fichier de configuration à un emplacement spécifié ;
• l'envoi, par la machine de commande centrale, d'une tâche de mise à jour et/ou d'extension comprenant la bibliothèque de scripts d'outils, la tâche crontab, et le fichier de configuration à l'hôte maître (212) du nœud correspondant ;
• la mise à jour, par l'hôte maître (212) du nœud correspondant, de contenus associés tels que la bibliothèque de scripts d'outils, la tâche crontab, et le fichier de configuration correspondant à l'emplacement spécifié ;
• la prise en charge, par l'hôte maître (212), de la machine correspondante pour traiter des contenus liés aux emplacements correspondants.

6. **Procédé d'exploitation et de maintenance pour gérer automatiquement et uniformément des nœuds d'un hôte bastion selon la revendication 1, comprenant en outre :**
• par le serveur de commande central (10), la configuration du fichier de construction et des informations de configuration du système global, et la synchronisation et la sauvegarde régulières de données de base vers l'hôte maître (212) des nœuds tout en synchronisant le fichier de construction et les informations de configuration du système global vers un dépôt Git d'entreprise ;
• la mise à jour du fichier de construction et des informations de configuration du système global vers le dépôt Git d'entreprise lorsqu'un problème survient avec le serveur de commande central (10) ;
• l'obtention et la génération d'un nouvel hôte de connexion (211) et d'un nouvel hôte maître (212) à partir du serveur de commande central (10) par l'intermédiaire d'un modèle lorsqu'un problème survient avec l'hôte de connexion (211) ou l'hôte maître (212).

7. **Procédé d'exploitation et de maintenance pour gérer automatiquement et uniformément des nœuds d'un hôte bastion selon la revendication 1, comprenant en outre :**
• par le serveur de commande central (10) en tant que centre de répartition, la gestion de l'hôte de connexion (211) et de l'hôte maître (212) de nœuds indépendants respectifs pour gérer indirectement et uniformément l'hôte des nœuds ;
• par le serveur de commande central (10), le déploiement du système WEB pour consolider diverses fonctions quotidiennes nécessaires, l'unification des diverses données collectées sous la forme d'une vue d'ensemble des données pour afficher des ressources informatiques (IT) de tous les nœuds, et l'affichage d'une surveillance en temps réel de données associées selon une dimension de regroupement d'applications.

8. **Procédé d'exploitation et de maintenance pour gérer automatiquement et uniformément des nœuds d'un hôte bastion selon la revendication 1, comprenant en outre :**
• la génération automatique d'un fichier de configuration de surveillance de Prometheus sur l'hôte métier (213) ;
• par l'hôte maître (212) local, la détection d'un message d'alarme, et la synchronisation des informations d'alarme comprenant un nom d'hôte où se trouve l'alarme vers le serveur de commande central (10) ;
• par le serveur de commande central (10), l'analyse du groupe d'applications et de la zone de réseau où se trouve l'hôte d'informations d'alarme par l'intermédiaire du nom d'hôte où surviennent les informations d'alarme ;
• l'émission de la tâche d'exécution correspondante vers l'hôte maître (212) du nœud qui est adapté si l'hôte métier (213) correspondant de la zone de réseau et/ou du groupe d'applications doit être traité selon les informations d'alarme.

9. **Procédé d'exploitation et de maintenance pour gérer automatiquement et uniformément des nœuds d'un hôte bastion selon la revendication 1, comprenant en outre :**
• la recherche de l'hôte maître (212) auquel elle appartient selon le champ de zone de réseau et l'exécution de la tâche correspondante lorsque la machine de commande centrale analyse le nom de l'hôte métier (213) ;
• l'achèvement du nommage de la nouvelle machine selon la règle en trois sections du groupe d'applications-IP intranet-zone de réseau après que la nouvelle machine a exécuté le script d'initialisation, les zones de réseau ayant une IP intranet nommée indépendamment, les IP intranet dans différentes zones de réseau étant identiques.

10. **Procédé d'exploitation et de maintenance pour gérer automatiquement et uniformément des nœuds d'un hôte bastion selon la revendication 1, comprenant en outre :**
• l'exposition, par l'hôte de connexion (211) en tant que machine d'entrée de sécurité du nœud où se trouve l'hôte de connexion (211), d'un port sshd standard vers l'extérieur de sorte que l'utilisateur se voit attribuer un login_id_rsa pour se connecter à l'hôte de connexion (211) correspondant afin d'entrer dans un intranet du nœud où se trouve l'hôte de connexion (211).

11. **Système d'exploitation et de maintenance pour gérer automatiquement et uniformément des nœuds d'un hôte bastion, le système d'exploitation et de maintenance comprenant :**
• une architecture de l'hôte bastion divisée selon des zones de réseau indépendantes de sites commerciaux respectifs pour traiter chaque environnement de réseau indépendant dans différentes régions comme un nœud indépendant, et dans les nœuds, une machine en tant qu'hôte de connexion (211) d'entrée de sécurité des nœuds et une machine en tant qu'hôte maître (212) de gestion et de commande d'exploitation et de maintenance des nœuds, l'hôte maître (212) étant chargé de gérer tous les hôtes métiers (213) du nœud ;
• un serveur de commande central (10), en tant qu'hôte maître supérieur de l'hôte de connexion (211) et de l'hôte maître (212) de chaque nœud, dans lequel le serveur de commande central (10) est déployé avec un système WEB et possède un fichier de construction et des informations de configuration d'un système global, et le serveur de commande central (10) maintient régulièrement la synchronisation de données associées du nœud correspondant avec l'hôte maître (212) des nœuds, et la machine de commande centrale est utilisée pour émettre une tâche vers l'hôte maître (212) du nœud de zone cible, la tâche comprenant l'une des tâches d'émission de gestion et de commande d'autorisations d'utilisateur, de surveillance de machine, et d'exploitation et de maintenance quotidiennes pour une machine cible du nœud de zone cible ;
• l'hôte maître (212) est utilisé pour configurer un programme sentinelle pour analyser et achever des opérations pour la tâche correspondante lorsque la tâche est détectée, dans lequel, lors de la configuration du programme sentinelle pour chaque hôte maître (212), le programme sentinelle est chargé de surveiller et d'enregistrer des événements tels que l'accès et la déconnexion de l'hôte métier (213) du nœud où se trouve le programme sentinelle, et de mettre à jour conjointement un fichier de configuration utilisé pour la surveillance locale ou l'exploitation et la maintenance par lots, le fichier de configuration utilisé pour l'exploitation et la maintenance par lots comprenant en outre un fichier de configuration dans la dimension de groupe d'applications ; et la configuration d'un script d'initialisation de la nouvelle machine accédée sur l'hôte maître (212) des nœuds ;
• l'hôte maître (212) d'un certain nœud est configuré pour déclencher un événement d'accès Salt-Minion une fois qu'un certain nœud accède à un nouvel hôte métier (213) : exécuter des étapes d'initialisation comprenant le nommage de la nouvelle machine selon la règle en trois sections de groupe d'applications-IP intranet-zone de réseau, installer le Salt-Minion sur la nouvelle machine et configurer l'hôte maître (212) auquel elle appartient après que la nouvelle machine a exécuté le script d'initialisation ;
• le serveur de commande central (10) est configuré pour :
∘ lorsqu'un certain groupe d'applications met à jour des données de gestion d'exploitation et de maintenance, déterminer le nœud où se trouve le groupe d'applications, obtenir tous les noms de machine du même groupe d'applications par l'intermédiaire de l'hôte maître (212) du nœud où se trouve le groupe d'applications selon un champ de groupe d'applications, et écrire en outre un fichier de configuration de gestion d'exploitation et de maintenance par lots sur les machines ci-dessus par l'intermédiaire du Salt-Minion,
∘ déployer un composant de base sur l'hôte maître (212) du nœud, qui comprend en outre : le déploiement du Salt-Minion pour recevoir une tâche de répartition provenant du serveur de commande central (10), le déploiement d'un Redis pour enregistrer les données associées correspondant à l'autorisation d'utilisateur-machine dans le nœud, et le déploiement du Salt-Master pour recevoir et gérer l'hôte métier (213) avec le Salt-Minion installé dans le nœud ;
∘ synchroniser la gestion de modèles de base respectifs après que l'installation initiale de l'hôte de connexion (211) et de l'hôte maître (212) des nœuds est achevée : l'achèvement, par un # salt -N login state.apply group.login, de la synchronisation de modèle vers l'hôte de connexion (211), et l'achèvement, par un # salt -N master state.apply group.master, de la synchronisation de modèle vers l'hôte maître (212),
• dans lequel l'hôte maître (212) en tant que machine de gestion et de commande d'exploitation et de maintenance dans la zone de réseau est configuré pour ne pas exposer de ports vers l'extérieur, et établir une confiance interne envers l'accès réseau du serveur de commande central (10).

12. **Système d'exploitation et de maintenance pour gérer automatiquement et uniformément des nœuds d'un hôte bastion selon la revendication 11, dans lequel :**
• le Redis est configuré sur les nœuds avec un emplacement déterminé stockant respectivement une bibliothèque de scripts d'outils, une tâche crontab et un fichier de configuration, la bibliothèque de scripts d'outils fournissant une série de scripts d'outils de synchronisation pour une utilisation pratique par l'utilisateur ; la tâche crontab comprend une tâche de nettoyage de disque et une tâche d'extraction automatique de salt-minion ;
• l'hôte maître (212) est en outre configuré pour recevoir une tâche de mise à jour et/ou d'extension comprenant la bibliothèque de scripts d'outils, la tâche crontab et le fichier de configuration envoyés depuis le serveur de commande central (10) vers l'hôte maître (212) du nœud correspondant, pour mettre à jour la bibliothèque de scripts d'outils, la tâche crontab, le fichier de configuration et d'autres contenus associés correspondant à l'emplacement spécifié, puis prendre en charge le traitement des contenus associés à l'emplacement correspondant.
